# EUROPÄISCHE PATENTSCHRIFT

(11) **EP 3 679 086 B1**
(45) Veröffentlichungstag und Bekanntmachung des Hinweises auf die Patenterteilung: **09.12.2020**
(21) Anmeldenummer: 18753174.4
(22) Anmeldetag: 10.08.2018
(51) Int. Cl.: C08G 77/388, C08J 3/03

(54) **WÄSSRIGE EMULSIONEN AUS OXAMIDOESTER-FUNKTIONALISIERTEN ORGANOPOLYSILOXANEN**
AQUEOUS EMULSIONS OF OXAMIDOESTER-FUNCTIONALIZED ORGANPOLYSILANES
ÉMULSIONS AQUEUSES D'ORGANOPOLYSILOXANES À FONCTION OXAMIDOESTER

(43) Veröffentlichungstag der Anmeldung: 15.07.2020
(73) Patentinhaber: Wacker Chemie AG, 81737 München (DE)
(72) Erfinder: SCHÄFER, Oliver, 84489 Burghausen (DE); GRATZL, Petra, 84577 Tüßling (DE)
(74) Vertreter: Budczinski, Angelika
(86) Internationale Anmeldenummer: PCT/EP2018/071810
(87) Internationale Veröffentlichungsnummer: WO 2020/030288

(56) Entgegenhaltungen:
- US-A1- 2017 362 391

## Beschreibung

Die Erfindung betrifft wässrige Emulsionen aus Oxamidoester-funktionalisierten Organopolysiloxanen, deren Herstellung sowie deren Verwendung.

Die chemische Gruppe -NR'-CO-CO-O-R' wird häufig als 2-Amino-2-oxoacetat- oder als Oxamid- bzw. als Oxamidoester-Gruppe bezeichnet, wobei im Folgenden der Begriff Oxamidoester als Bezeichnung für diese Gruppe verwendet werden soll. Oxamidoester haben durch die Kombination der Halbester-Struktur mit einer Oxo-Gruppe den Vorteil reaktiver als Amide oder Carbamate zu sein, v.a. bei der Umsetzung mit Aminen oder Alkoholen. Sie sind im Vergleich zu Isocyanat-Strukturen jedoch deutlich stabiler; sie dimerisieren oder trimerisieren z.B. nicht und sind deutlich weniger reaktiv, was die Reaktionsführung mit diesen Gruppen deutlich einfacher gestaltet.

Oxamidoester-funktionelle Polysiloxane sind in vielen Anwendungsbereichen brauchbar v.a. jedoch zur Herstellung von Blockcopolymeren von thermoplastischen Siloxanen wie sie z.B. in EP-A 1 963 404 beschrieben werden. Grundsätzlich bekannt und beschrieben ist die Herstellung solcher Oxamidoester-funktionellen Siloxane in US-A 2007/0149745. Hierbei werden als Ausgangsprodukte Bisaminoalkyl-funktionelle Siloxane verwendet, die über verschiedene Methoden hergestellt werden können. Die erfindungsgemäß eingesetzten mit Oxamidoestergruppen der Formel (II) funktionalisierten Organopolysiloxane (I) können nach den in US 7,501,184 B2, insbesondere Spalte 13, Zeile 14 bis 48, beschriebenem Verfahren hergestellt werden.

Nachteilig an diesen Produkten ist die Tatsache, dass v.a. höhermolekulare Vertreter dieser Produktklasse sehr hohe Viskositäten aufweisen, was die Verarbeitung in technischen Prozessen erschwert. Auch wird durch die hohe Viskosität das Benetzungsverhalten dieser Produktklasse nachteilig beeinflusst, was v.a. bei der Benetzung von stark strukturierten Oberflächen oder faserartigen Gebilden von Nachteil ist. Die Verdünnung mit organischen Lösungsmitteln zur Verringerung der Viskosität ist hierbei häufig von Nachteil, weil dieses wieder durch i.d.R. aufwändige technische Prozesse entfernt werden muss.

US 2017/362391 A1 offenbart ein Verfahren zur Herstellung von amidoester -funktionellen Organosiloxanen durch Umsetzung von Bisaminoalkyl-funktionellen Siloxanen und Dialkyloxalat.

Es bestand daher die Aufgabe, Formulierungen auf Basis von Oxamidoester-funktionellen Siloxanen bereitzustellen, deren Verarbeitungsviskosität unabhängig von ihrem Molekulargewicht in weiten Bereichen variabel gesteuert werden kann, um diese so leichter technisch zu verarbeiten. Gleichzeitig sollte bei den verwendeten Formulierungen die Reaktivität der OxamidoesterGruppen nicht nachteilig beeinflusst werden. Überraschenderweise wurde gefunden, dass wässrige Emulsionen von Oxamidoester-funktionalisierten Organopolysiloxanen in der Art hergestellt werden können, dass auch höhermolekulare Produkte mit niedrigen Viskositäten verarbeitet werden können, ohne dass hier jedoch durch die Anwesenheit von Wasser die Reaktivität der Oxamidoester Gruppe nachträglich beeinflusst wird.

Diese Emulsionen zeigen auch nach Lagerung keine bzw. nur sehr geringe Viskositätsänderungen.

Gegenstand der Erfindung sind wässrige Emulsionen enthaltend
(A) Oxamidoester-funktionalisierte Organopolysiloxane enthaltend Einheiten der Formel

   R¹ₐ(OR²)_{b}Z_{c}SiO(_{4-a-b-c})/₂ (I),

   wobei
   R¹ gleich oder verschieden sein kann und einen einwertigen, gegebenenfalls substituierten, SiC-gebundenen Kohlenwasserstoffrest bedeutet,
   R² gleich oder unterschiedlich sein kann und Wasserstoffatom oder einen einwertigen, gegebenenfalls substituierten Kohlenwasserstoffrest bedeutet,
   a gleich 0, 1, 2 oder 3, bevorzugt 1 oder 2, ist,
   b gleich 0, 1, 2 oder 3, bevorzugt 0, ist,
   c gleich 0 oder 1 ist und
   Z eine Gruppe der Formel

   -Y-NR^{x}-CO-CO-O-R³ (II)

   ist, wobei
   R³ Wasserstoffatom oder monovalente, gegebenenfalls substituierte Kohlenwasserstoffreste bedeutet, die durch Sauerstoffatome unterbrochen sein können,
   R^{x} Wasserstoffatom oder gegebenenfalls substituierte Kohlenwasserstoffreste bedeutet und
   Y zweiwertige, gegebenenfalls substituierte Kohlenwasserstoffreste darstellt, die durch Sauerstoffatome unterbrochen sein können,
   mit der Maßgabe, dass die Summe a+b+c≤3 ist und pro Molekül mindestens ein Rest Z anwesend ist,
(B) Emulgatoren und
(C) Wasser.

Beispiele für Kohlenwasserstoffreste R¹ sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der α- und der β-Phenylethylrest.

Vorzugsweise handelt es sich bei Rest R¹ um gegebenenfalls mit Halogenatomen oder Hydroxygruppen substituierte, SiC-gebundene Kohlenwasserstoffreste mit 1 bis 18 Kohlenstoffatomen, bevorzugt einen Kohlenwasserstoffrest mit 1 bis 12 Kohlenstoffatomen, besonders bevorzugt einen aliphatischen Kohlenwasserstoffrest mit 1 bis 12 Kohlenstoffatomen, insbesondere den Methyl-, Ethyl-, Octyl- oder Dodecylrest, ganz besonders bevorzugt den Methylrest.

Beispiele für Rest R² sind die für den Rest R¹ angegebenen Reste sowie über Kohlenstoffatom gebundene Polyalkylenglykolreste oder Wasserstoffatom.

Bevorzugt handelt es sich bei Rest R² um Kohlenwasserstoffreste, besonders bevorzugt um Kohlenwasserstoffreste mit 1 bis 8 Kohlenstoffatomen, insbesondere um den Methyl-, Ethyl- oder Propylrest.

Beispiele für Rest R³ sind die für den Rest R¹ angegebenen Reste sowie über Kohlenstoffatom gebundene Polyalkylenglykolreste oder Wasserstoffatom.

Bevorzugt handelt es sich bei Rest R³ um Kohlenwasserstoffreste, besonders bevorzugt um Kohlenwasserstoffreste mit 1 bis 8 Kohlenstoffatomen, insbesondere um den Methyl-, Ethyl- oder Propylrest.

Beispiele für Rest R^{x} sind Wasserstoffatom oder die für den Rest R¹ angegebenen Reste.

Vorzugsweise handelt es sich bei Rest R^{x} um Wasserstoffatom oder gegebenenfalls mit -CN oder -Halogen substituierte Kohlenwasserstoffreste, bevorzugt um Wasserstoffatom oder Alkylgruppen, besonders bevorzugt um Wasserstoffatom oder lineare Alkylgruppen mit 1 bis 6 Kohlenstoffatomen, insbesondere um Wasserstoffatom, den Methyl- oder Ethylrest, ganz besonders bevorzugt um Wasserstoffatom.

Beispiele für Rest Y sind aliphatisch gesättigte oder ungesättigte, geradkettige oder verzweigte Reste, die mit Halogenatomen substituiert sein können.

Rest Y ist vorzugsweise ein Alkylenrest mit 3 bis 6 Kohlenstoffatomen, der gegebenenfalls substituiert sein kann, insbesondere mit Fluor oder Chlor. Bevorzugt handelt es sich bei Rest Y um einen Propylen- oder Butylenrest, insbesondere um den Propylenrest.

Die erfindungsgemäß eingesetzten Siloxane (A) können aus unterschiedlichen Einheiten aufgebaut sein, wie beispielsweise M-Einheiten, wie z.B. (R¹₂ (OR²) SiO_{1/2}] und/oder [R¹₂ZSiO_{1/2}] , D-Einheiten, wie z.B. [R¹₂SiO_{2/2}] und/oder [(OR²) ZSiO_{2/2}] und/oder T-Einheiten [ZSiO_{3/2}] und/oder [R¹SiO_{3/2}] sowie gegebenenfalls Q-Einheiten Q [SiO_{4/2}], mit der Maßgabe, dass je Molekül mindestens eine Struktureinheit mit einer Gruppe Z enthalten ist, wobei R¹, R² und Z die oben dafür angegebene Bedeutung haben.

Bei den erfindungsgemäß eingesetzten Siloxanen (A) handelt es sich bevorzugt um Oxamidoester-funktionalisierte Polydiorganosiloxane der folgenden Formel

[R¹₂ZSiO_{1/2}]₂[R¹₂SiO_{2/2}]ₘ (III),

wobei
R¹, R² und Z die oben dafür angegebene Bedeutung haben und
m eine ganze Zahl und mindestens 30 ist.

Obwohl in Formel (III) nicht dargestellt, können die erfindungsgemäß eingesetzten Siloxane (A) herstellungsbedingt einen molaren Anteil von Verzweigungen, d.h. T- und/oder Q-Einheiten, also wenn R¹ die Bedeutung von Siloxanylrest annimmt, von bevorzugt bis zu 1%, besonders bevorzugt bis zu 1000 ppm, insbesondere keine, aufweisen.

Bevorzugt hat Index m einen Wert von 30 bis 2000, besonders bevorzugt von 65 bis 800, insbesondere von 110 bis 600.

Der Index m in Formel (III) wird vorzugsweise so gewählt, dass die Viskosität der eingesetzten Oxamidoester-funktionalisierten Polydiorganosiloxane (A) bei vorzugsweise mindestens 50 mPas, bevorzugt mindestens 100 mPas, besonders bevorzugt mindestens 250 mPas, jeweils gemessen bei 25°C und einem Schergefälle von 10/s, und vorzugsweise höchstens 100000 mPas, bevorzugt höchstens 50000 mPas, besonders bevorzugt höchstens 10000 mPas, jeweils gemessen bei 25°C und einem Schergefälle von 10/s, liegt.

Beispiele für erfindungsgemäß eingesetzte Siloxane (A) sind Et-O-CO-CO-NH-C₃H₆-SiMe₂- [OSiMe₂] ₁₀-O-SiMe₂-C₃H₆-NH-CO-CO-O-Et, Me-O-CO-CO-NH-C₃H₆-SiMe₂- [OSiMe₂] ₁₀-O-SiMe₂-C₃H₆-NH-CO-CO-O-Me, Et-O-CO-CO-NH-C₃H₆-SiMe₂- [OSiMe₂]₅₀-O-SiMe₂-C₃H₆-NH-CO-CO-O-Et, Me-O-CO-CO-NH-C₃H₆-SiMe₂- [OSiMe₂] ₅₀-O-SiMe₂-C₃H₆-NH-CO-CO-O-Me, Et-O-CO-CO-NH-C₃H₆-SiMe₂- [OSiMe₂] ₂₀₀-O-SiMe₂-C₃H₆-NH-CO-CO-O-Et_{.} Me-O-CO-CO-NH-C₃H₆-SiMe₂- [OSiMe₂] ₂₀₀-C)-SiMe₂-C₃H₆-NH-CO-CO-O-Me, Et-O-CO-CO-NH-C₃H₆-SiMe₂- [OSiMe₂] ₆₀₀-O-SiMe₂-C₃H₆--NH-CO-CO-O-Et, Me-O-CO-CO-NH-C₃H₆-SiMe₂- [OSiMe₂] ₆₀₀-O-SiMe₂-C₃H₆-NH-CO-CO-O-Me, Et-O-CO-CO-NH-C₃H₆-SiMe₂- [OSiMe₂] ₃₀ [OSiMeC₆H_{5] 20}-O-SiMe₂-C₃H₆-NH-CO-CO-O-Et, Me-O-CO-CO-NH-C₃H₆-SiMe₂- [OSiMe₂] ₃₀ [OSiMeC₆H₅] ₂₀-O-SiMe₂-C₃H₆-NH-CO-CO-O-Me, Et-O-CO-CO-NH-C₃H₆-SiMe₂- [OSiMe₂] ₁₂₀ [OSiMeC₆H₅] ₆₀-O-SiMe₂-C₃H₆-NH-CO-CO-O-Et, Me-O-CO-CO-NH-C₃H₆-SiMe₂- [OSiMe₂] ₁₂₀ [OSiMeC₆H₅] ₆₀-O-SiMe₂-C₃H₆-NH-CO-CO-O-Me, Me₃Si- [OSiMe₂] ₆₀ [OSiMeC₃H₆-NH-CO-CO-O-Me] ₁₀-O-SiMe₃, Me₃Si- [OSiMe₂] ₆₀ [OSiMeC₃H₆-NH-CO-CO-O-Et] ₁₀-O-SiMe₃, Me-O-CO-CO-NH-C₃H₆-SiMe₂- [OSiMe₂] ₆₀ [OSiMeC₃H₆-NH-CO-CO-O-Me] ₁₀-O-SiMe₂-C₃H₆-NH-CO-CO-O-Me und Et-O-CO-CO-NH-C₃H₆-SiMe₂- [OSiMe₂] ₆₀ [OSiMeC₃H₆-NH-CO-CO-O-Et] ₁₀-O-SiMe₂-C₃H₆—NH-CO-CO-O-Et, wobei Me Methylrest und Et Ethylrest bedeutet.

Bevorzugt handelt es sich bei den erfindungsgemäß eingesetzten Siloxanen (A) um lineare Oxamidoester-funktionalisierten Polydiorganosiloxane wie Et-O-CO-CO-NH-C₃H₆-SiMe₂- [OSiMe₂] ₁₀-O-SiMe₂ -C₃H₆-NH-CO-CO-O-Et, Et-O-CO-CO-NH-C₃H₆-SiMe₂- [OSiMe₂] ₅₀-O-SiMe₂-C₃H₆-NH-CO-CO-O-Et, Et-O-CO-CO-NH-C₃H₆-SiMe₂- [OSiMe₂] ₂₀₀-O-SiMe₂-C₃H₆-NH-CO-CO-O-Et. Et-O-CO-CO-NH-C₃H₆-SiMe₂- [OSiMe₂] ₆₀₀-O-SiMe₂-C₃H₆-NH-CO-CO-O-Et.

Bei den Organosiloxanen (A) handelt es sich um handelsübliche Produkte bzw. können nach in der Siliciumchemie gängigen Methoden hergestellt werden.

Die erfindungsgemäßen Emulsionen enthalten Siloxane (A) in Mengen von bevorzugt 5 bis 50 Gew.-%, besonders bevorzugt von 10 bis 50 Gew.-%.

Als Emulgatoren (B) können alle bisher bekannten nicht-ionischen, ampholytischen, anionischen oder kationischen Emulgatoren oder auch deren Gemische eingesetzt werden.

Als anionische Emulgatoren eignen sich besonders:
1. Alkylsulfate, besonders solche mit einer Kettenlänge von 8 bis 18 Kohlenstoffatomen, Alkyl- und Alkarylethersulfate mit 8 bis 18 Kohlenstoffatomen im hydrophoben Rest und 1 bis 40 Ethylenoxid (EO)- bzw. Propylenoxid(PO)einheiten;
2. Sulfonate, besonders Alkylsulfonate mit 8 bis 18 Kohlenstoffatomen, Alkylarylsulfonate mit 8 bis 18 Kohlenstoffatomen, Tauride, Ester und Halbester der Sulfobernsteinsäure mit einwertigen Alkoholen oder Alkylphenolen mit 4 bis 15 Kohlenstoffatomen; gegebenenfalls können diese Alkohole oder Alkylphenole auch mit 1 bis 40 EO-Einheiten ethoxyliert sein;
3. Alkali- und Ammoniumsalze von Carbonsäuren mit 8 bis 20 Kohlenstoffatomen im Alkyl-, Aryl-, Alkaryl- oder Aralkylrest; oder
4. Phosphorsäureteilester und deren Alkali- und Ammoniumsalze, besonders Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten.

Als nicht-ionische Emulgatoren eignen sich besonders:
5. Polyvinylalkohol, der noch 5 bis 50 %, vorzugsweise 8 bis 20 % Vinylacetateinheiten aufweist, mit einem Polymerisationsgrad von 500 bis 3000;
6. Alkylpolyglycolether, vorzugsweise solche mit 8 bis 40 EO-Einheiten und Alkylresten von 8 bis 20 Kohlenstoffatomen;
7. Alkylarylpolyglycolether, vorzugsweise solche mit 8 bis 40 EO-Einheiten und 8 bis 20 Kohlenstoffatomen in den Alkyl- und Arylresten;
8. Ethylenoxid/Propylenoxid(EO/PO)-Blockcopolymere, vorzugsweise solche mit 8 bis 40 EO- bzw. PO-Einheiten;
9. Additionsprodukte von Alkylaminen mit Alkylresten von 8 bis 22 Kohlenstoffatomen mit Ethylenoxid oder Propylenoxid;
10. Fettsäuren mit 6 bis 24 Kohlenstoffatomen;
11. Alkylpolyglykoside der allgemeinen Formel R*-O-Zo, worin R* einen linearen oder verzweigten, gesättigten oder ungesättigten Alkylrest mit im Mittel 8 - 24 Kohlenstoffatomen und Zo einen Oligoglykosidrest mit im Mittel o = 1 - 10 Hexose- oder Pentoseeinheiten oder Gemischen davon bedeuten;
12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen; oder
13. Polare Gruppen enthaltende lineare Organo(poly)siloxane, insbesondere solche mit Alkoxygruppen mit bis zu 24 Kohlenstoffatomen und/oder bis zu 40 EO- und/oder PO-Gruppen.

Als kationische Emulgatoren eignen sich besonders:
14. Salze von primären, sekundären und tertiären Fettaminen mit 8 bis 24 Kohlenstoffatomen mit Essigsäure, Schwefelsäure, Salzsäure und Phosphorsäuren;
15. Quarternäre Alkyl- und Alkylbenzolammoniumsalze, insbesondere solche, deren Alkylgruppen 6 bis 24 Kohlenstoffatome besitzen, insbesondere die Halogenide, Sulfate, Phosphate und Acetate; oder
16. Alkylpyridinium-, Alkylimidazolinium- und Alkyloxazoliniumsalze, insbesondere solche, deren Alkylkette bis zu 18 Kohlenstoffatome besitzt, speziell die Halogenide, Sulfate, Phosphate und Acetate.

Als ampholytische Emulgatoren eignen sich besonders:
17. Langkettig substituierte Aminosäuren, wie N-Alkyl-di-(aminoethyl-)glycin oder N-Alkyl-2-aminopropionsäuresalze; oder
18. Betaine, wie N-(3-Acylamidopropyl)-N,N-dimethylammonium-salze mit einem C8-C18-Acylrest und Alkyl-imidazolium-Betaine.

Bevorzugt als Emulgatoren (B) sind nicht-ionische Emulgatoren, insbesondere die vorstehend unter 6. aufgeführten Alkylpolyglycolether, die unter 9. aufgeführten Additionsprodukte von Alkylaminen mit Ethylenoxid oder Propylenoxid, die unter 11. aufgeführten Alkylpolyglykoside und der unter 5. aufgeführten Polyvinylalkohol.

Bei den in den erfindungsgemäßen wässrigen Emulsionen verwendeten nicht-ionischen, Polyethylenoxidhaltigen Emulgatoren (B) handelt es sich vorzugsweise um solche mit einem HLB-Wert von vorzugsweise größer oder gleich 16, bevorzugt größer oder gleich 17 und gleichzeitig einem Gehalt an Ethylenoxid-Einheiten von vorzugsweise größer oder gleich 45, bevorzugt größer oder gleich 50, sowie vorzugsweise kleiner oder gleich 600, bevorzugt kleiner oder gleich 400, besonders bevorzugt kleiner oder gleich 250.

Der HLB-Wert (HLB steht für engl. hydrophilic-lipophilic balance) beschreibt den hydrophilen und lipophilen Anteil von hauptsächlich nichtionischen Tensiden. Der HLB-Wert kann für nicht-ionische Tenside nach Hans-Dieter Dörfler, Grenzflächen und Kolloidchemie, VCH, Weinheim, 1994, S. 198 berechnet werden.

Beispiele für die erfindungsgemäß bevorzugt eingesetzten nicht-ionischen, Polyethylenoxid-haltigen Emulgatoren (B) sind:
- Alkylpolyglycolether, vorzugsweise solche mit Alkylresten von 8 bis 20 Kohlenstoffatomen, wie z. B. Steareth-100 (9005-00-9), Talloweth-50, Talloweth-80 (61791-28-4), Trideceth-50 (24938-91-8),
- Carbonsäurepolyglycolester, insbesondere Fettsäurepolyglycolester, vorzugsweise solche Carbonsäurerestern von 8 bis 20 Kohlenstoffatomen, wie z. B. PEG-75 Oleat, PEG-200 Oleat, PEG-300 Monooleat, PEG-400 Oleat, PEG-150 Laurat, PEG-400 Laurat, PEG-75 Stearat, PEG-100 Stearat, PEG-600 Stearat, PEG-150 Distearat, - Ethoxylierte Sorbitanfettsäureester, wie z. B. PEG-40 Sorbitanoleat, PEG-80 Sorbitanlaurat, - Ethoxyliertes Rizinusöl oder hydrierte Varianten, wie z. B. (Bezeichnung nach INCI-Nomenklatur) PEG 75 Castor Oil oder PEG200 Castor Oil bzw. PEG-80 hydrogenated Castor Oil, PEG-100 hydrogenated Castor Oil, PEG-200 hydrogenated Castor Oil,
- Ethoxylierte Fettamine, wie z. B. PEG-100 Talg-alkylamin (61791-44-4), PEG-40 Stearylamin,
- Ethoxylierte Glyceryl Fettsäurecarboxylate, wie z. B. PEG-40 Glyceryllaurat, PEG-200 Glycerylstearat, PEG-200 Glyceryltallowat, PEG-200 hydriertes Glycerylpalmat
- Blockcopolymere aus Ethylenoxid- und Propylenoxid-Einheiten (Polyalkylenblockpolymere wie die sogenannten Poloxamere), wie z. B. PEG-PPG-PEG-Blockpolymer Pluronic® F-108 (HLB > 24; Mn = 14600) (erhältlich bei Sigma-Aldrich), und
- Copolymere aus Ethylenoxid- und Propylenoxid-Einheiten, die über einen Ethylendiamin-Kern verbrückt sind (sogenannte Poloxamine), wie z. B. Tetronic 1107 ((HLB-Wert: 24; Mn ≈ 15000) (erhältlich bei Sigma- Aldrich).

Die erfindungsgemäß eingesetzten nicht-ionischen, Polyethylenoxid-haltigen Emulgatoren (B) können aus einem der o. g. Emulgatoren oder aus einem Gemisch zweier oder mehrerer o. g. Emulgatoren bestehen, wobei sie in reiner Form oder als Lösungen eines oder mehrerer Emulgatoren in Wasser oder organischen Lösungsmitteln eingesetzt werden können.

Die erfindungsgemäßen Emulsionen enthalten Emulgatoren (B) vorzugsweise in Mengen von 0,5 bis 20 Gew.-%, bevorzugt von 1 bis 15 Gew.-%, insbesondere von 2 bis 10 Gew.-%.

Beispiele für Wasser sind natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer.

Bevorzugt handelt es sich bei dem erfindungsgemäß eingesetzten Wasser (C) um Wasser mit einer Leitfähigkeit von weniger als 10 µS/cm, insbesondere um weniger als 2 µS/cm.

Die erfindungsgemäßen Emulsionen enthalten Wasser (C) in Mengen von bevorzugt 1 bis 95 Gew.-%, besonders bevorzugt 5 bis 85 Gew.-%, insbesondere 10 bis 80 Gew.-%.

Zusätzlich zu den Komponenten (A), (B) und (C) können die erfindungsgemäßen wässrigen Emulsionen weitere Bestandteile enthalten, wie
(D) Co-Emulgatoren
(E) nichtwässrige Lösemittel und
(F) Hilfsstoffe, wie z.B. pH-Regulierungsmittel, Salze, Schauminhibitoren, Verdicker und/oder Schutzkolloide, Konservierungsmittel, Desinfektionsmittel, Netzmittel, Korrosionsinhibitoren, Farbstoffe, Duftstoffe oder deren Mischungen.

Bevorzugte Beispiele für gegebenenfalls eingesetzte Co-Emulgatoren (D) sind 1-Alkanole mit C5- bis C8-Ketten, Alkandiole mit C4- bis C8-Kette sowie Ethylenglykol-, Propylenglykol-, Dipropylenglykol- oder Diethylenglykolmonoalkylether.

Als gegebenenfalls eingesetzte Co-Emulgatoren (D) besonders bevorzugt sind 1-Pentanol, 1-Hexanol, 1-Octanol, 1,3-Butandiol, 1,2-Hexandiol, 2-Ethylhexan-1,3-diol, 1,2-Octandiol, Diethylenglykolmethylether, Diethylenglykolethylether, Diethylenglykolmono-n-butylether oder Propylenglykolmethylether.

Falls Komponente (D) eingesetzt wird, handelt es sich um Mengen von bevorzugt 0,1 bis 20 Gew.-%, besonders bevorzugt 0,4 bis 15 Gew.-%, insbesondere 0,8 bis 10 Gew.-%, jeweils bezogen auf die Gesamtmenge der Emulsion. Die erfindungsgemäßen Emulsionen enthalten bevorzugt keine Komponente (D).

Beispiele für gegebenenfalls eingesetzte nichtwässrige Lösemittel (E) sind Ethanol, n- oder i-Propanol, Butanole, wie 1-Butanol, 2-Butanol oder 2-Methyl-2-propanol, Glycol, Propandiol, Glycerin, 1-Butoxyethoxy-2-propanol oder 3-Methyl-3-methoxybutanol, 1-Aminobutan, 2-Aminobutan, 2-Amino-2-methyl-propan, 1-Aminopentan, 2-Aminopentan, 1-Aminohexan, 1-Aminoheptan und 1-Aminooctan; Ethyl-, Propyl-, Isopropyl-, Butyl-, Isobutyl-, Pentyl-, Isopentyl- und Hexylacetat; Methyl-, Ethyl- und tert.-Butylpropionat; Methyl-, Ethyl-, Propyl- und Butylbutyrat; 2-Butanon, 2-Pentanon, 3-Pentanon, 4-Methyl-2-pentanon, 2-Hexanon, 3-Hexanon, 2-Heptanon, 3-Heptanon, 4-Heptanon, 5-Methyl-3-Heptanon, 2-Octanon und 3-Octanon sowie Mischungen, wobei aliphatische Alkohole bevorzugt sind.

Falls Komponente (E) eingesetzt wird, handelt es sich um Mengen von bevorzugt 0,5 bis 20 Gew.-%, besonders bevorzugt 0,5 bis 5 Gew.-%, jeweils bezogen auf die Gesamtmenge der Emulsion. Die erfindungsgemäßen Emulsionen enthalten bevorzugt keine Komponente (E).

Beispiele für gegebenenfalls eingesetzte Hilfsstoffe (F) sind als pH-Regulierungsmittel einsetzbare sämtliche bekannte Säuren bzw. Laugen, sofern sich ihr Einsatz nicht aus anwendungstechnischen oder ökologischen Gründen bzw. aus Gründen des Verbraucherschutzes verbietet.

Beispiele für Salze (Elektrolyte) (F) sind insbesondere solche aus der Gruppe der anorganischen Salze, wobei eine breite Anzahl der verschiedensten Salze eingesetzt werden kann. Bevorzugte Kationen sind dabei die Alkali- und Erdalkalimetalle, bevorzugte Anionen sind die Halogenide und Sulfate. Aus herstellungstechnischer Sicht ist der Einsatz von Natriumacetat oder Natriumchlorid als Komponente (F) in den erfindungsgemäßen wässrigen Emulsionen bevorzugt.

Beispiele für Schauminhibitoren (F) sind Seifen, Paraffine oder Silikonöle.

Beispiele für vorzugsweise eingesetzte Verdicker (F) sind modifizierte Polysaccharide wie Stärke, Cellulose, Gummi Arabicum und Guar Gums, z. B. Polymere mit dem INCI-Namen Cellulose Gum, Guar Gum, Xanthan Gum oder Cassia Gum. Weitere Beispiele für Verdicker sind hydrophob modifizierte nichtionische Cellulosederivate, z. B. das Cellulosederivat mit dem INCI-Namen Hydroxyethylcellulose. Weitere Beispiele für Verdicker sind vernetzte Acrylsäure- und Methacrylsäurepolymere und Derivate der vernetzten Acrylsäure- und Methacrylsäurepolymere, z. B. Polymere mit dem INCI-Namen Carbomer. Weitere Beispiele für Verdicker sind Agentien, die in Kombination mit Tensiden eine verdickende Wirkung erzielen. Beispiele sind Monoglyceride von Fettsäuren.

Beispiele für Konservierungsmittel (F) sind Methylisothiozolinon, Chlormethylisothiazolinon, Benzylisothiazolinon, Phenoxyethanol, Methylparaben, Ethylparaben, Propylparaben, Butylparaben, Isobutylparaben, Alkalibenzoate, Alkalisorbate, Iodopropynylbutylcarbamat, Benzylalkohol und 2-Brom-2-nitropropan-1,3-diol.

Falls Komponente (F) eingesetzt wird, handelt es sich bevorzugt um Verdicker, pH-Regulierungsmittel und Konservierungsmittel.

Falls Komponente (F) eingesetzt wird, handelt es sich um Mengen von bevorzugt 0,01 bis 20 Gew.-%, besonders bevorzugt 0,1 bis 10 Gew.-%, jeweils bezogen auf die Gesamtmenge der Emulsion. Die erfindungsgemäßen Emulsionen enthalten bevorzugt die Komponente (F).

Bevorzugt handelt es sich bei den erfindungsgemäßen Emulsionen um solche enthaltend
(A) Siloxane enthaltend Einheiten der Formel (I),
(B) nicht-ionische Emulgatoren,
(C) Wasser,
gegebenenfalls (D) Co-Emulgatoren,
gegebenenfalls (E) nichtwässrige Lösemittel und
gegebenenfalls (F) Hilfsstoffe, ausgewählt aus pH-Regulierungsmitteln, Salzen, Schauminhibitoren, Verdicker und/oder Schutzkolloide, Konservierungsmitteln, Desinfektionsmitteln, Netzmitteln, Korrosionsinhibitoren, Farbstoffen, Duftstoffen oder deren Mischungen.

Besonders bevorzugt handelt es sich bei den erfindungsgemäßen Emulsionen um solche enthaltend
(A) Siloxane enthaltend Einheiten der Formel (I),
(B) nicht-ionische Emulgatoren,
(C) Wasser,
gegebenenfalls (D) Co-Emulgatoren,
gegebenenfalls (E) nichtwässrige Lösemittel und
(F) Hilfsstoffe, ausgewählt aus pH-Regulierungsmitteln, Salzen, Schauminhibitoren, Verdicker und/oder Schutzkolloide, Konservierungsmitteln, Desinfektionsmitteln, Netzmitteln, Korrosionsinhibitoren, Farbstoffen, Duftstoffen oder deren Mischungen.

Insbesondere handelt es sich bei den erfindungsgemäßen Emulsionen um solche enthaltend
(A) Siloxane enthaltend Einheiten der Formel (I),
(B) nicht-ionische Emulgatoren,
(C) Wasser,
gegebenenfalls (D) Co-Emulgatoren,
gegebenenfalls (E) nichtwässrige Lösemittel und
(F) pH-Regulierungsmitteln und Konservierungsmitteln.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Emulsionen beträgt der Anteil der Komponenten (A) bis (C) an der Gesamtmenge an eingesetzten Stoffen bevorzugt mindestens 80 Gew.-%, besonders bevorzugt mindestens 90 Gew.-%, ganz besonders bevorzugt mindestens 95 Gew.-%.

Bevorzugt enthalten die erfindungsgemäßen Emulsionen keine über die Komponenten (A) bis (F) hinausgehenden Bestandteile.

Die erfindungsgemäßen Emulsionen weisen Viskositäten bei 25 °C von bevorzugt höchstens 50 000 mPas, besonders bevorzugt höchstens 30 000 mPas, insbesondere höchstens 15 000 mPas auf.

Die erfindungsgemäßen Emulsionen weisen vorzugsweise Partikelgrößen (D50) von kleiner oder gleich 1000 nm, bevorzugt kleiner oder gleich 500 nm, besonders bevorzugt kleiner oder gleich 300 nm auf.

Die erfindungsgemäßen Emulsionen weisen vorzugsweise eine monomodale Partikelgrößenverteilung auf.

Die erfindungsgemäßen Emulsionen weisen vorzugsweise Festgehalte von mindestens 20 Gew.-%, bevorzugt von mindestens 30 Gew.-%, besonders bevorzugt von mindestens 40 Gew.-% auf.

Die Herstellung der erfindungsgemäßen wässrigen Emulsionen kann nach an sich bekannten Verfahren erfolgen. Üblicherweise erfolgt die Herstellung durch einfaches Verrühren aller Bestandteile in beliebiger Reihenfolge z.B. bei Temperaturen von vorzugsweise 1 bis 50°C und gegebenenfalls anschließendem Homogenisieren, z.B. mit Strahldispergatoren, Rotor-Stator-Homogenisatoren bei Umfangsgeschwindigkeiten von vorzugsweise 5 bis 40 m/s, Kolloidmühlen oder Hochdruckhomogenisatoren bei Homogenisierdrücken von bevorzugt 50 bis 2000 bar.

Ein weiterer Gegenstand der Erfindung ist ein Verfahren zur Herstellung der erfindungsgemäßen Emulsionen durch Verrühren aller Bestandteile in beliebiger Reihenfolge.

In einer bevorzugten Ausführungsform des erfindungsgemäßen Verfahrens werden die Oxamidoester-funktionalisierten Polydiorganosiloxane (A) in Wasser (C) mit den Emulgatoren (B), gegebenenfalls den Co-Emulgatoren (D), gegebenenfalls dem nichtwässrigen Lösemittel (E) und gegebenenfalls den Hilfsstoffen (F) miteinander intensiv gemischt.

Es werden dabei stabile Emulsionen gebildet, in denen die Oxamidoester-funktionalisierten Polydiorganosiloxane (A) bevorzugt in fein verteilter Form vorliegen.

Der Emulgiervorgang zur Herstellung der erfindungsgemäßen wässrigen Emulsionen von Oxamidoester funktionalisierten Polydiorganosiloxanen (A) wird vorzugsweise bei Temperaturen von 10 bis 80°C, bevorzugt 15 bis 70°C, durchgeführt. Eine Temperaturerhöhung kann vorzugsweise durch den Eintrag mechanischer Scherenergie, die für den Emulgierprozess benötigt wird, zustande kommen. Die Temperaturerhöhung wird jedoch nicht zur Beschleunigung eines chemischen Prozesses benötigt.

Das erfindungsgemäße Verfahren wird vorzugsweise beim Druck der umgebenden Atmosphäre, also 900 bis 1100 hPa, durchgeführt, kann aber auch bei höheren oder niederen Drücken durchgeführt werden.

Das erfindungsgemäße Verfahren kann diskontinuierlich oder kontinuierlich erfolgen.

Technologien zur Herstellung von Emulsionen von Organopolysiloxanen sind bereits seit langem bekannt. So kann das intensive Mischen und Dispergieren in Rotor-Stator-Rührvorrichtungen, Kolloidmühlen, Hochdruckhomogenisatoren, Mikrokanälen, Membranen, Strahldüsen und ähnlichem, oder mittels Ultraschall erfolgen. Homogenisiergeräte und Verfahren sind z. B. in Ullmann's Encyclopedia of Industrial Chemistry, CD-ROM-Ausgabe 2003, Wiley-VCH Verlag, unter dem Stichwort "Emulsions" beschrieben.

Abhängig von den Eigenschaften der Komponenten (A), (B), gegebenenfalls (D), gegebenenfalls (E) und gegebenenfalls (F) können sich aber bevorzugte Vorgehensweisen ergeben.

Beispielsweise kann es vorteilhaft sein, Emulgatoren (B) und gegebenenfalls Co-Emulgatoren (D) als Hilfsmittel mit einem Teil des Dispersionsmittels Wasser (C) in der Emulgierapparatur vorzulegen und in die so erhaltene Mischung Komponente (A) und gegebenenfalls die weiteren Komponenten einzuarbeiten.

Die erfindungsgemäßen Emulsionen sind bevorzugt leicht fließfähig und relativ niederviskos sowie gut mit Wasser verdünnbar und bilden dann stabile Folgemulsionen.

Die erfindungsgemäßen Emulsionen haben den Vorteil, dass sie sowohl in konzentrierter als auch in verdünnter Form gut lagerstabil sind.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Die Viskositäten wurden an einem Rheometer "MCR 302" der Fa. Anton Paar nach DIN EN ISO 3219: 1994 und DIN 53019 gemessen, wobei ein Kegel-Platte-System (Kegel C950-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/-0,05°C, die Messzeit 3 min. Die Viskositätsangabe stellt den arithmetischen Mittelwert von drei unabhängig durchgeführten Einzelmessungen dar. Die Messunsicherheit der dynamischen Viskosität beträgt 1,5%. Der Schergeschwindigkeitsgradient wurde in Abhängigkeit von der Viskosität gewählt und wird für jede Viskositätsangabe separat ausgewiesen.

1H-NMR-Spektren werden als Lösung in CDCl3 an einem Bruker Avance 500-NMR-Spektrometer (5 mm selektiver 1H-NMR-Probenkopf) mit einer Messfrequenz 500,13 MHz aufgenommen. Die Auswertung erfolgt wie dem Fachmann bekannt und in folgender Literatur beschrieben: "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300; "Chapter 8 - NMR spectroscopy of organosilicon compounds", Elizabeth A. Williams, The Chemistry of Organic Silicon Compounds, 1989 John Wiley and Sons Ltd, 511-533.

Die Partikelgrößen wurden an einem Partikelgrößenmessgerät Zetasizer Nano-S, Fa. Malvern, Software Version 6.01 mittels dynamischer Lichtstreuung (Messmethode nach Mie) bestimmt. Dazu wurden die Emulsionen mit gefiltertem und entgastem Wasser auf einen Feststoffgehalt von 0,5 Gew.-% verdünnt. Die angegebenen Werte beziehen sich immer auf den Wert D(50). D(50) ist als volumengemittelter Partikeldurchmesser zu verstehen, bei dem 50% aller gemessenen Partikel einen volumengemittelten Durchmesser kleiner als der ausgewiesene Wert D(50) aufweisen.
**Polydimethylsiloxan 1:** Farbloses, klares, transparentes Bis-Ethyloxalatoaminopropyl-funktionelles Silikonöl Et-O-CO-CO-NH-C₃H₆-SiMe₂- [OSiMe₂] ₓ-O-SiMe₂-C₃H₆-NH-CO-CO-O-Et mit einer APHA Zahl von 6, einer Viskosität von 340 mPas, einem mittleren Molekulargewicht Mₙ von 9763 g/mol und einem Rest-Si-OH Gehalt von 82 ppm.
**Polydimethylsiloxan 2:** Farbloses, klares, transparentes Bis-Ethyloxalatoaminopropyl-funktionelles Silikonöl Et-O-CO-CO-NH-C₃H₆-SiMe₂- [OSiMe₂]ₓ-O-SiMe₂-C₃H₆-NH-CO-CO-O-Et mit einer APHA Zahl von 3, einer Viskosität von 11 Pas, einem mittleren Molekulargewicht Mₙ von 38672 g/mol und einem Rest-Si-OH Gehalt von 62 ppm.
**Emulgator 1:** wässrige Lösung eines verzweigten Tridecanolethoxylates mit 10 EO-Einheiten und mit einem Festgehalt von 80 % (käuflich erhältlich unter der Bezeichnung Arlypon IT 10/80 von der BASF SE, D-Ludwigshafen);
**Emulgator 2:** Isotridecylalkoholethoxylat mit 5 EO-Einheiten (käuflich erhältlich unter der Bezeichnung Arlypon IT 5 von der BASF SE, D-Ludwigshafen);
**Emulgator 3:** Isotridecylalkoholpolyglykolether mit 16 EO-Einheiten (käuflich erhältlich unter der Bezeichnung Arlypon IT 16 von der BASF SE, D-Ludwigshafen);
**Konservierer 1:** 2-Phenoxyethanol.

### Beispiel 1

In einem Hochleistungs-Emulgiergerät (käuflich erhältlich unter der Bezeichnung Ultra-Turrax T 50 bei IKA®-Werke GmbH & Co. KG, Staufen, Deutschland) werden auf Stufe 2 7,61 g Emulgator 1, 6,1 g Emulgator 2 und 9,99 g Wasser innerhalb von 1 Minute homogenisiert. Danach werden in jeweiligen Abständen von 1 Minute in 4 gleichen Teilen insgesamt 121,28 g Polydimethylsiloxan 1 so zugegeben, dass das Emulgiergerät auf Stufe 3 eine homogene Mischung erzeugt. Diese Voremulsion gibt eine sogenannte steife Phase, d.h. eine hochviskose Mischung. Anschließend werden auf Mischstufe 3 jeweils 12 mal in Abständen von 1 Minute 5 ml Wasser (Gesamtmenge 60 ml) zur Verdünnung zugegeben, so dass die Mischung deutlich cremiger (niederviskoser) wird. Abschließend werden dann auf Mischstufe 2 jeweils 8 mal in Abständen von 1 Minute 8 ml Wasser (Gesamtmenge 64 ml) zur weiteren Verdünnung zugegeben. Zum Abschluss werden noch 0,65 g des Konservierers 1 zugegeben.

Man erhält eine glatte, cremige, weiße Silikonöl-Emulsion mit einem Festgehalt von 49,6 %. Die Teilchengrößenverteilung ist monomodal mit einem D50 Wert von 149 nm. Die Emulsion ist auch nach 12-monatiger Lagerung bei Raumtemperatur homogen und stabil.

### Beispiel 2

In einem Hochleistungs-Emulgiergerät (käuflich erhältlich unter der Bezeichnung Ultra-Turrax T 50 bei IKA®-Werke GmbH & Co. KG, Staufen, Deutschland) werden auf Stufe 2 8,28 g Emulgator 3 und 10,71 g Wasser innerhalb von 1 Minute homogenisiert. Danach werden in jeweiligen Abständen von 1 Minute in 4 gleichen Teilen insgesamt 138,0 g Polydimethylsiloxan 1 so zugegeben, dass das Emulgiergerät auf Stufe 3 eine homogene Mischung erzeugt. Im Anschluss daran werden nochmals 8,28 g Emulgator 3 eingemischt. Diese Voremulsion gibt eine sogenannte steife Phase, d.h. eine hochviskose Mischung.
Anschließend werden auf Mischstufe 3 jeweils 10 mal in Abständen von 1 Minute 5 ml Wasser (Gesamtmenge 50 ml) zur Verdünnung zugegeben, so dass die Mischung deutlich cremiger (niederviskoser) wird. Abschließend werden dann auf Mischstufe 2 jeweils 14 mal in Abständen von 1 Minute 8 ml Wasser (Gesamtmenge 112 ml) zur weiteren Verdünnung zugegeben.
Man erhält eine glatte, cremige, weiße Silikonöl-Emulsion mit einem Festgehalt von 47,2 %. Die Teilchengrößenverteilung ist monomodal mit einem D50 Wert von 236 nm. Die Emulsion ist auch nach 12-monatiger Lagerung bei Raumtemperatur homogen und stabil.

### Beispiel 3

In einem Hochleistungs-Emulgiergerät (käuflich erhältlich unter der Bezeichnung Ultra-Turrax T 50 bei IKA®-Werke GmbH & Co. KG, Staufen, Deutschland) werden auf Stufe 2 7,61 g Emulgator 1, 6,1 g Emulgator 2 und 9,99 g Wasser innerhalb von 1 Minute homogenisiert. Danach werden in jeweiligen Abständen von 2 Minuten in 4 gleichen Teilen insgesamt 121,28 g Polydimethylsiloxan 2 so zugegeben, dass das Emulgiergerät auf Stufe 3 eine homogene Mischung erzeugt. Diese Voremulsion gibt eine sogenannte steife Phase, d.h. eine hochviskose Mischung. Anschließend werden auf Mischstufe 3 jeweils 12 mal in Abständen von 1 Minute 5 ml Wasser (Gesamtmenge 60 ml) zur Verdünnung zugegeben, so dass die Mischung deutlich cremiger (niederviskoser) wird. Abschließend werden dann auf Mischstufe 2 jeweils 8 mal in Abständen von 1 Minute 8 ml Wasser (Gesamtmenge 64 ml) zur weiteren Verdünnung zugegeben. Zum Abschluss werden noch 0,65 g des Konservierers 1 zugegeben.
Man erhält eine glatte, cremige, weiße Silikonöl-Emulsion mit einem Festgehalt von 49,6 %. Die Teilchengrößenverteilung ist monomodal mit einem D50 Wert von 211 nm. Die Emulsion ist auch nach 12-monatiger Lagerung bei Raumtemperatur homogen und stabil.

### Beispiel 4

In einem Hochleistungs-Emulgiergerät (käuflich erhältlich unter der Bezeichnung Ultra-Turrax T 50 bei IKA®-Werke GmbH & Co. KG, Staufen, Deutschland) werden auf Stufe 2 8,28 g Emulgator 3 und 10,71 g Wasser innerhalb von 1 Minute homogenisiert. Danach werden in jeweiligen Abständen von 2 Minuten in 4 gleichen Teilen insgesamt 138,0 g Polydimethylsiloxan 2 so zugegeben, dass das Emulgiergerät auf Stufe 3 eine homogene Mischung erzeugt. Im Anschluss daran werden nochmals 8,28 g Emulgator 3 eingemischt. Diese Voremulsion gibt eine sogenannte steife Phase, d.h. eine hochviskose Mischung.
Anschließend werden auf Mischstufe 3 jeweils 10 mal in Abständen von 1 Minute 5 ml Wasser (Gesamtmenge 50 ml) zur Verdünnung zugegeben, so dass die Mischung deutlich cremiger (niederviskoser) wird. Abschließend werden dann auf Mischstufe 2 jeweils 14 mal in Abständen von 1 Minute 8 ml Wasser (Gesamtmenge 112 ml) zur weiteren Verdünnung zugegeben.
Man erhält eine glatte, cremige, weiße Silikonöl-Emulsion mit einem Festgehalt von 47,2 %. Die Teilchengrößenverteilung ist monomodal mit einem D50 Wert von 278 nm. Die Emulsion ist auch nach 12-monatiger Lagerung bei Raumtemperatur homogen und stabil.

## Patentansprüche

1. Wässrige Emulsionen enthaltend
(A) Oxamidoester-funktionalisierte Organopolysiloxane enthaltend Einheiten der Formel
R¹ₐ(OR²)_{b}Z_{c}SiO_{(4-a-b-c)/2} (I) ,
wobei
R¹ gleich oder verschieden sein kann und einen einwertigen, gegebenenfalls substituierten, SiC-gebundenen Kohlenwasserstoffrest bedeutet,
R² gleich oder unterschiedlich sein kann und Wasserstoffatom oder einen einwertigen, gegebenenfalls substituierten Kohlenwasserstoffrest bedeutet,
a gleich 0, 1, 2 oder 3 ist,
b gleich 0, 1, 2 oder 3 ist,
c gleich 0 oder 1 ist und
Z eine Gruppe der Formel
-Y-NR^{x}-CO-CO-O-R³ (II)
ist, wobei
R³ Wasserstoffatom oder monovalente, gegebenenfalls substituierte Kohlenwasserstoffreste bedeutet, die durch Sauerstoffatome unterbrochen sein können,
R^{x} Wasserstoffatom oder gegebenenfalls substituierte Kohlenwasserstoffreste bedeutet und
Y zweiwertige, gegebenenfalls substituierte Kohlenwasserstoffreste darstellt, die durch Sauerstoffatome unterbrochen sein können,
mit der Maßgabe, dass die Summe a+b+c≤3 ist und pro Molekül mindestens ein Rest Z anwesend ist,
(B) Emulgatoren und
(C) Wasser.

2. Wässrige Emulsionen gemäß Anspruch 1, **dadurch gekennzeichnet, dass** es sich bei Siloxanen (A) um Oxamidoester-funktionalisierte Polydiorganosiloxane der folgenden Formel
[R¹₂ZSiO_{1/2}]₂[R¹₂SiO_{2/2}]ₘ (III)
handelt, wobei
R¹, R² und Z die oben dafür angegebene Bedeutung haben und
m eine ganze Zahl und mindestens 30 ist.

3. Wässrige Emulsionen gemäß Anspruch 1 oder 2, **dadurch gekennzeichnet, dass** sie Siloxane (A) in Mengen von 5 bis 50 Gew.-% enthalten.

4. Wässrige Emulsionen gemäß einem oder mehreren der Ansprüche 1 bis 3, **dadurch gekennzeichnet, dass** es sich bei Emulgatoren (B) um sind nicht-ionische Emulgatoren handelt.

5. Wässrige Emulsionen gemäß einem oder mehreren der Ansprüche 1 bis 4, **dadurch gekennzeichnet, dass** sie Emulgatoren (B) in Mengen von 0,5 bis 20 Gew.-% enthalten.

6. Wässrige Emulsionen gemäß einem oder mehreren der Ansprüche 1 bis 5, **dadurch gekennzeichnet, dass** sie Wasser (C) in Mengen von 1 bis 95 Gew.-% enthalten.

7. Wässrige Emulsionen gemäß einem oder mehreren der Ansprüche 1 bis 6, **dadurch gekennzeichnet, dass** es sich um solche handelt enthaltend
(A) Siloxane enthaltend Einheiten der Formel (I),
(B) nicht-ionische Emulgatoren,
(C) Wasser,
gegebenenfalls (D) Co-Emulgatoren,
gegebenenfalls (E) nichtwässrige Lösemittel und
gegebenenfalls (F) Hilfsstoffe, ausgewählt aus pH-Regulierungsmitteln, Salzen, Schauminhibitoren, Verdicker und/oder Schutzkolloide, Konservierungsmitteln, Desinfektionsmitteln, Netzmitteln, Korrosionsinhibitoren, Farbstoffen, Duftstoffen oder deren Mischungen.

8. Wässrige Emulsionen gemäß einem oder mehreren der Ansprüche 1 bis 7, **dadurch gekennzeichnet, dass** sie Viskosität bei 25 °C von höchstens 50 000 mPas aufweisen.

9. Wässrige Emulsionen gemäß einem oder mehreren der Ansprüche 1 bis 8, **dadurch gekennzeichnet, dass** sie einen Festgehalt von mindestens 20 Gew.-% aufweisen.

10. Verfahren zur Herstellung der Emulsionen gemäß einem oder mehreren der Ansprüche 1 bis 9 durch Verrühren aller Bestandteile in beliebiger Reihenfolge.

11. Verfahren gemäß Anspruch 10, **dadurch gekennzeichnet, dass** Oxamidoester-funktionalisierten Polydiorganosiloxane (A) in Wasser (C) mit den Emulgatoren (B), gegebenenfalls den Co-Emulgatoren (D), gegebenenfalls dem nichtwässrigen Lösemittel (E) und gegebenenfalls den Hilfsstoffen (F) miteinander intensiv gemischt werden.

## Claims

1. Aqueous emulsions comprising
(A) oxamidoester-functionalized organopolysiloxanes comprising units of the formula
R¹ₐ (OR²) _{b}Z_{c}SiO_{(4-a-b-c)/2} (I),
where
R¹ may be identical or different and represents a monovalent, optionally substituted, SiC-bonded hydrocarbon radical,
R² may be identical or different and represents a hydrogen atom or a monovalent, optionally substituted hydrocarbon radical,
a is 0, 1, 2 or 3,
b is 0, 1, 2 or 3,
c is 0 or 1 and
Z is a group of the formula
-Y-NR^{x}-CO-CO-O-R³ (II)
where
R³ represents a hydrogen atom or monovalent, optionally substituted hydrocarbon radicals that may be interrupted by oxygen atoms,
R^{x} represents a hydrogen atom or optionally substituted hydrocarbon radicals and
Y represents divalent, optionally substituted hydrocarbon radicals that may be interrupted by oxygen atoms,
with the proviso that the sum a+b+c is ≤ 3 and each molecule contains at least one radical Z,
(B) emulsifiers and
(C) water.

2. Aqueous emulsions according to Claim 1, **characterized in that** the siloxanes (A) are oxamidoester-functionalized polydiorganosiloxanes of the following formula
[R¹₂ZSiO_{1/2}]₂[R¹₂SiO_{2/2}] m (III)
where
R¹, R² and Z are as defined above and
m is an integer and is at least 30.

3. Aqueous emulsions according to Claim 1 or 2, **characterized in that** they contain siloxanes (A) in amounts of 5% to 50% by weight.

4. Aqueous emulsions according to one or more of Claims 1 to 3, **characterized in that** the emulsifiers (B) are nonionic emulsifiers.

5. Aqueous emulsions according to one or more of Claims 1 to 4, **characterized in that** they contain emulsifiers (B) in amounts of 0.5% to 20% by weight.

6. Aqueous emulsions according to one or more of Claims 1 to 5, **characterized in that** they contain water (C) in amounts of 1% to 95% by weight.

7. Aqueous emulsions according to one or more of Claims 1 to 6, **characterized in that** they are emulsions comprising
(A) siloxanes comprising units of the formula (I),
(B) nonionic emulsifiers,
(C) water,
optionally (D) co-emulsifiers,
optionally (E) non-aqueous solvents and
optionally (F) auxiliaries selected from pH regulators, salts, foam inhibitors, thickeners and/or protective colloids, preservatives, disinfectants, wetting agents, corrosion inhibitors, dyes, fragrances or mixtures thereof.

8. Aqueous emulsions according to one or more of Claims 1 to 7, **characterized in that** they have a viscosity at 25°C of not more than 50 000 mPas.

9. Aqueous emulsions according to one or more of Claims 1 to 8, **characterized in that** they have a solids content of not less than 20% by weight.

10. Method for preparing the emulsions according to one or more of Claims 1 to 9 by stirring together all the constituents in any desired order.

11. Method according to Claim 10, **characterized in that** the oxamidoester-functionalized polydiorganosiloxanes (A) are intensively intermixed in water (C) with the emulsifiers (B), optionally the co-emulsifiers (D), optionally the non-aqueous solvent (E) and optionally the auxiliaries (F).

## Revendications

1. Émulsions aqueuses contenant :
(A) des organopolysiloxanes à fonctionnalisation oxamidoester contenant des unités de la formule :
R¹ₐ (OR²)_{b}Z_{c}SiO_{(4-a-b-c)/2} (I)
dans laquelle
R¹ peut être identique ou différent et signifie un radical hydrocarboné monovalent, éventuellement substitué, relié à SiC,
R² peut être identique ou différent et signifie un atome d'hydrogène ou un radical hydrocarboné monovalent, éventuellement substitué,
a vaut 0, 1, 2 ou 3,
b vaut 0, 1, 2 ou 3,
c vaut 0 ou 1, et
Z est un groupe de la formule :
-Y-NR^{x}-CO-CO-O-R³ (II)
dans laquelle
R³ signifie un atome d'hydrogène ou des radicaux hydrocarbonés monovalents, éventuellement substitués, qui peuvent être interrompus par des atomes d'oxygène, R^{x} signifie un atome d'hydrogène ou des radicaux hydrocarbonés éventuellement substitués, et
Y représente des radicaux hydrocarbonés bivalents, éventuellement substitués, qui peuvent être interrompus par des atomes d'oxygène,
à condition que la somme a + b + c ≤ 3 et qu'au moins un radical Z soit présent par molécule,
(B) des émulsifiants et
(C) de l'eau.

2. Émulsions aqueuses selon la revendication 1, **caractérisées en ce que** les siloxanes (A) consistent en des polydiorganosiloxanes à fonctionnalisation oxamidoester de la formule suivante :
[R¹₂ZSiO_{1/2}]₂ [R¹₂SiO_{2/2}]ₘ (III)
dans laquelle
R¹, R² et Z ont la signification indiquée précédemment pour ceux-ci et
m est un nombre entier et vaut au moins 30.

3. Émulsions aqueuses selon la revendication 1 ou 2, **caractérisées en ce qu'**elles contiennent des siloxanes (A) en quantités de 5 à 50 % en poids.

4. Émulsions aqueuses selon une ou plusieurs des revendications 1 à 3, **caractérisées en ce que** les émulsifiants (B) consistent en des émulsifiants non ioniques.

5. Émulsions aqueuses selon une ou plusieurs des revendications 1 à 4, **caractérisées en ce qu'**elles contiennent des émulsifiants (B) en quantités de 0,5 à 20 % en poids.

6. Émulsions aqueuses selon une ou plusieurs des revendications 1 à 5, **caractérisées en ce qu'**elles contiennent de l'eau (C) en quantités de 1 à 95 % en poids.

7. Émulsions aqueuses selon une ou plusieurs des revendications 1 à 6, **caractérisées en ce qu'**il s'agit d'émulsions contenant :
(A) des siloxanes contenant des unités de la formule (I),
(B) des émulsifiants non ioniques,
(C) de l'eau,
éventuellement (D) des co-émulsifiants,
éventuellement (E) des solvants non aqueux, et
éventuellement (F) des adjuvants, choisis parmi les agents de régulation du pH, les sels, les inhibiteurs de moussage, les épaississants et/ou les colloïdes protecteurs, les agents conservateurs, les agents désinfectants, les agents mouillants, les inhibiteurs de corrosion, les colorants, les parfums ou leurs mélanges.

8. Émulsions aqueuses selon une ou plusieurs des revendications 1 à 7, **caractérisées en ce qu'**elles présentent une viscosité à 25 °C d'au plus 50 000 mPas.

9. Émulsions aqueuses selon une ou plusieurs des revendications 1 à 8, **caractérisées en ce qu'**elles présentent une teneur en solides d'au moins 20 % en poids.

10. Procédé de fabrication des émulsions selon une ou plusieurs des revendications 1 à 9 par agitation de tous les constituants dans un ordre quelconque.

11. Procédé selon la revendication 10, **caractérisé en ce que** des polydiorganosiloxanes à fonctionnalisation oxamidoester (A) dans de l'eau (C) sont mélangés intensivement avec les émulsifiants (B), éventuellement les co-émulsifiants (D), éventuellement le solvant non aqueux (E) et éventuellement les adjuvants (F).
